# EUROPÄISCHE PATENTSCHRIFT

(11) **EP 3 504 059 B1**
(45) Veröffentlichungstag und Bekanntmachung des Hinweises auf die Patenterteilung: **08.06.2022**
(21) Anmeldenummer: 17761208.2
(22) Anmeldetag: 23.08.2017
(51) Int. Cl.: B32B 7/02, B32B 7/14, B32B 15/08, B32B 15/092, B32B 15/095, B32B 15/18, B32B 27/08, B32B 27/38, B32B 27/40, B32B 3/00, B32B 3/02, B32B 3/08, B32B 3/18

(54) **VERBUNDWERKSTOFF MIT VERBESSERTEN UMFORMEIGENSCHAFTEN UND VERFAHREN ZUR HERSTELLUNG EINES SOLCHEN VERBUNDWERKSTOFFS UND EINES UMGEFORMTEN BAUTEILS HIERAUS**
COMPOSITE MATERIAL WITH IMPROVED SHAPING PROPERTIES AND METHOD FOR PRODUCING SUCH A COMPOSITE MATERIAL AND A SHAPED COMPONENT FROM IT
MATÉRIAU COMPOSITE À PROPRIÉTÉS DE FAÇONNAGE AMÉLIORÉES ET PROCÉDÉ PERMETTANT DE PRODUIRE UN TEL MATÉRIAU COMPOSITE ET UN ÉLÉMENT FAÇONNÉ À PARTIR DE CELUI-CI

(30) Priorität: 24.08.2016 DE 102016115726
(43) Veröffentlichungstag der Anmeldung: 03.07.2019
(73) Patentinhaber: Salzgitter Flachstahl GmbH, 38239 Salzgitter (DE)
(72) Erfinder: WEDEMEIER, Andreas, 38110 Braunschweig (DE); POLLER, Benjamin, 30167 Hannover (DE)
(74) Vertreter: Moser Götze & Partner Patentanwälte mbB
(86) Internationale Anmeldenummer: PCT/EP2017/071213
(87) Internationale Veröffentlichungsnummer: WO 2018/037036

(56) Entgegenhaltungen:
- EP-A2- 1 136 253
- DE-A1- 19 846 533

## Beschreibung

Die Erfindung betrifft einen Verbundwerkstoff aufweisend mindestens ein metallisches Grundflachelement, ein Deckflachelement aus Kunststoff oder aus Metall und eine zwischen dem Grundflachelement und dem Deckflachelement angeordnete Zwischenschicht aus mindestens einem ersten Duromer und einem zweiten Duromer mit einer höheren Polymerisationstemperatur als dem ersten Duromer, wobei mindestens das erste Duromer in einem ausgehärteten Zustand und das zweite Duromer in einem nicht ausgehärteten Zustand vorliegen. Die Flachelemente können als Blech- oder Bandmaterialien vorliegen, wobei alle Arten von Metall in Frage kommen, jedoch insbesondere Stahl. Die Deckflachelemente können auch aus Kunststoff sein. Des Weiteren betrifft die Erfindung ein Verfahren zur Herstellung eines solchen Verbundwerkstoffes und ein Verfahren zur Herstellung eines umgeformten Bauteils hieraus.

Im Automobilbau werden große Anstrengungen unternommen, um die Fahrzeuggewichte zu reduzieren. Hierbei kommen unterschiedlichste Ansätze zum Einsatz. Der derzeitige Trend geht dabei zu hybriden Lösungen, d.h. zur Kombination unterschiedlicher Werkstoffe, um ein Optimum zwischen Kosten, Leistung und Gewichtsreduzierung zu erreichen.

Um diese Anforderungen zu erfüllen, wurden in den letzten Jahren Gewicht einsparende Materialien, wie z.B. mehrlagige Verbundwerkstoffe aus einem Verbund aus Flachelementen aus Stahl und einer Zwischenschicht aus Kunststoff, entwickelt, welche die Eigenschaften von Stahl mit einer geringeren Dichte verbinden. Die Deckflachelemente können auch aus Kunststoff sein. Diese mehrlagigen Verbundwerkstoffe werden beispielsweise bei der Herstellung von Karosserieteilen für Kraftfahrzeuge oder auch für Auspuffanlagen verwendet. Diese Verbundwerkstoffe werden auch als Verbundbleche, Sandwich- oder Leichtbleche bezeichnet. Bekannt sind solche Verbundwerkstoffe beispielsweise aus der Offenlegungsschrift DE 10 2014 112 788 A1.

Außerdem beschreiben die deutsche Patentschrift DE 100 14 017 C1 und die hierzu parallele europäische Patentanmeldung EP 1 136 253 A2 jeweils ein Verfahren zur Herstellung eines Verbundblechs, wobei zwischen zwei Bleche vorzugsweise aus Stahl ein Epoxidharz aufgebracht wird, welches erst bei höheren Temperaturen polymerisiert. Um die beiden Bleche dennoch miteinander zu fixieren, werden in die Epoxidschicht kleine Spots bestehend aus einem anderen Epoxidharz, das eine niedrigere Polymerisationstemperatur aufweist und das nach der Polymerisation noch beschränkt verformbar ist, eingebracht. Das so fixierte Verbundblech wird bei schon polymerisierten Epoxidharz-Spots und noch nicht polymerisiertem Epoxidharz der Zwischenlage zum Formbauteil umgeformt. Nach dem Umformen wird bei erhöhter Temperatur, die optimalerweise im Bereich einer Lackeinbrenntemperatur liegt, die Polymerisation des Epoxidharzes der Zwischenlage durchgeführt.

In der deutschen Offenlegungsschrift DE 101 20 121 A1 wird ein Verfahren zur Herstellung eines Verbundblechs offenbart, bei dem auf ein Basisblech ein Verstärkungsblech aufgeklebt wird. Dazu wird zunächst zwischen die mindestens zwei Bleche vollflächig ein Klebstoff mit einer erhöhten Aushärtungstemperatur aufgetragen. Zur Fixierung der beiden Bleche wird an dem umlaufenden Rand der Bleche ein weiterer Klebstoff mit einer niedrigeren Aushärtungstemperatur aufgetragen. Dies dient der Abdichtung des Raums mit vollflächig aufgetragenem, noch nicht ausgehärtetem Klebstoff und verhindert ein Auslaufen von diesem bei der nachfolgenden Umformung. Zur zusätzlichen Fixierung können auch im übrigen Bereich des Blechs Fixierspots bestehend aus dem Klebstoff mit niedrigerer Aushärtungstemperatur vorgesehen sein. Nach erfolgter Umformung wird der vollflächig aufgetragene Klebstoff, der ein Hotmelt, insbesondere ein Epoxidharz, ein Polyurethanharz oder ein Plastisol sein kann, vollständig ausgehärtet mit dem Ergebnis einer optimalen Festigkeit.

Weitere Klebstoffe zur Verwendung als Fixierung zweier Bleche sind aus der deutschen Offenlegungsschrift DE 2 403 163 bekannt.

Auch ist bereits aus der deutschen Offenlegungsschrift DE 198 46 533 A1 ein Verfahren zum Herstellen eines einbrennlackierten Formbauteils aus einem Doppellagenblech mit einer mit dessen Deckblechen verklebenden Zwischenlage aus einem Epoxidharz in Form eines Hotmelts bekannt. Hierbei wird aus dem Doppellagenblech bei kohärentem aber noch nicht polymerisiertem Epoxidharz durch Umformung ein Formbauteil hergestellt. Bei dem nachfolgenden Lackieren des umgeformten Bauteiles erfolgt das Einbrennen des Lackes bei mindestens 180° C für mindestens 30 Minuten, wobei gleichzeitig auch die Polymerisation des Epoxidharzes erfolgt. Die Rezeptur der Zwischenlage soll auch ohne Schaden eine Temperatur von 230 °C für etwa 10 Minuten überstehen.

Im Folgenden wird für diese Produktgruppe einheitlich der Begriff Verbundwerkstoff verwendet.

Verbundwerkstoffe zeichnen sich durch ein niedriges Gewicht in Verbindung mit einer hohen Beulsteifigkeit aus. Um dies zu erreichen, besteht der Werkstoff aus möglichst dünnen Flachelementen, insbesondere aus Blechen aus vorzugsweise Stahl, besonders bevorzugt mit einer Dicke von 0,2 bis 2,0 mm und einer dazwischenliegenden Kernschicht aus Kunststoff mit einer Dicke von vorzugsweise 0,2 bis 2 mm. Die Deckflachelemente können metallisch zum Beispiel aus Stahl und auch aus Kunststoff sein.

Den positiven Eigenschaften von Verbundwerkstoffen stehen allerdings Nachteile bei der Herstellung des Verbundwerkstoffs und bei der Weiterverarbeitung durch Umformung zu einem Bauteil gegenüber. Aus dem Stand der Technik ist bekannt, dass als Zwischenschicht sowohl thermoplastische, wie auch duroplastische Kunststoffe für Verbundwerkstoffe eingesetzt werden.

Grundsätzlich lassen sich thermoplastische und duroplastische Kunststoffe wie folgt unterscheiden:
Thermoplaste, auch Plastomere genannt, sind Kunststoffe, die sich in einem bestimmten Temperaturbereich (thermoplastisch) verformen lassen. Dieser Vorgang ist reversibel, das heißt, er kann durch Abkühlung und Wiedererwärmung bis in den schmelzflüssigen Zustand beliebig oft wiederholt werden, solange nicht durch Überhitzung die sogenannte thermische Zersetzung (Pyrolyse) des Materials einsetzt. Darin unterscheiden sich Thermoplaste von den Duroplasten. Zudem sind Thermoplaste aus wenig oder nicht verzweigten, also linearen Kohlenstoffketten aufgebaut, die nur durch schwache physikalische Bindungen miteinander verbunden sind.

Duroplaste, auch Duromere genannt, sind dagegen Kunststoffe, die nach ihrer Aushärtung nicht mehr verformt werden können. Duroplaste sind harte, glasartige Polymerwerkstoffe, die über chemische Hauptvalenzbindungen dreidimensional fest vernetzt sind. Die Vernetzung erfolgt beim Mischen von Vorprodukten mit Verzweigungsstellen und wird entweder bei Raumtemperatur mit Hilfe von Katalysatoren chemisch oder bei hohen Temperaturen thermisch aktiviert.

Die Anbindung von Thermoplasten an metallische Flachelemente ist typischerweise nur über Haftvermittler realisierbar, da nichtmodifizierte Thermoplaste über keine reaktiven Endgruppen verfügen, die für eine chemische Anbindung an eine metallische Oberfläche geeignet sind.

Das Aufbringen von Haftvermittlern ist kostenaufwändig und die Modifizierung der Thermoplaste erfordert ebenfalls weitere Arbeitsschritte und ist kostspielig.

Die aus beiden Maßnahmen resultierende Anbindung des thermoplastischen Polymers an die metallische Matrix ist im Vergleich zur Anbindung von Duromeren (z.B. Klebstoffe auf Epoxid-, Polyurethanbasis usw.) an Metalle zudem deutlich schlechter ausgebildet.

Die alternativ für Verbundwerkstoffe eingesetzten ausgehärteten duroplastischen Polymere (z.B. Epoxide oder Polyurethane) sind aufgrund der Quervernetzung deutlich steifer als Thermoplaste und ermöglichen daher hohe Steifigkeiten des umgeformten Bauteils, allerdings sind sie auch sehr viel spröder bei Zug- oder Biegebeanspruchungen.

Verbundwerkstoffe mit duroplastischer, ausgehärteter Zwischenschicht können daher nicht ohne weiteres wie Thermoplaste zu einem Bauteil umgeformt werden sondern die Zwischenschicht zeigt hierbei vielmehr eine ausgeprägte Tendenz zum Sprödbruch. Die Reparatur dieser Systeme durch erneutes Aufschmelzen, wie es z.B. bei Thermoplasten möglich ist, ist bei den allermeisten ausgehärteten Duromeren nicht möglich.

Möglich wäre zwar für die Herstellung eines umgeformten Bauteils, einen Verbundwerkstoff mit nur teilausgehärteter duromerer Zwischenschicht herzustellen, der aufgrund der noch gering ausgeprägten Quervernetzung eine verbesserte Umformbarkeit aufweist, jedoch besteht die Gefahr, dass das nicht ausgehärtete Duromer hierbei aus dem Verbundwerkstoff herausgequetscht und somit das Umformwerkzeug verschmutzt wird.

Zusätzlich ist es möglich, dass sich die beiden Deckschichten durch die Verdrängung des nicht ausgehärteten Duromers berühren und so Eigenschaften des Verbundwerkstoffs verloren gehen (z.B. Steifigkeit, Schwingungsdämpfung, Wärmeisolation, Mindestwerkstoffdicke, optisches Erscheinungsbild des Bauteils etc.).

Der gezielte Stopp der Polymerisationsreaktion für eine Teilaushärtung des Duromers ist bei der Herstellung des Verbundwerkstoffes zudem nur sehr schwierig realisierbar, was die Prozesssicherheit stark beeinträchtigt. Außerdem sind die Eigenschaften des aus dem Verbundwerkstoff durch Umformung entstandenen Bauteils hiervon sehr stark abhängig.

Nachteilig ist weiterhin, dass die Reaktivität eines teilausgehärteten Duromers zusätzlich mit steigender Lagerzeit deutlich abnimmt, bzw. kann diese nur bei sehr tiefen Temperaturen für einen begrenzten Zeitraum hinreichend erhalten werden, was den Fertigungs- und Logistikaufwand für die Bauteilfertigung stark erhöhen würde.

Außerdem ist es allgemein bekannt, Bleche mit lokalen Verstärkung zu versehen.

Aufgabe der Erfindung ist es daher, einen Verbundwerkstoff mit einer Zwischenschicht aus duroplastischem Kunststoff anzugeben, welches verbesserte Umformeigenschaften aufweist und zudem kostengünstig und prozesssicher herstellbar ist. Zudem soll ein Verfahren zur Herstellung eines solchen Verbundwerkstoffs und ein Verfahren zur Herstellung eines Bauteils aus einem solchen Verbundwerkstoff bereitgestellt werden.

Ein erfindungsgemäßer Verbundwerkstoff wird ausgehend vom Oberbegriff in Verbindung mit den kennzeichnenden Merkmalen des Anspruchs 1 angegeben. Vorteilhafte Ausgestaltungen der Erfindung sind in den Unteransprüchen 2 bis 6 angegeben. Ein erfindungsgemäßes Verfahren zur Herstellung eines solchen Verbundwerkstoffs wird durch die Ansprüche 7 bis 9 bereitgestellt, ein erfindungsgemäßes Verfahren zur Herstellung eines Bauteils aus einem solchen Verbundwerkstoffs durch die Ansprüche 10 und 11.

Gemäß der Lehre der vorliegenden Erfindung wird die aufgezeigte Aufgabe durch einen Verbundwerkstoff, bestehend aus einem Grundflachelement aus Metall, einem Deckflachelement und einer zwischen dem Grundflachelement und dem Deckflachelement angeordneten Zwischenschicht aus mindestens einem ersten Duromer und einem zweiten Duromer mit einer höheren Polymerisationstemperatur als dem ersten Duromer, wobei mindestens das erste Duromer in einem ausgehärteten Zustand und das zweite Duromer in einem nicht ausgehärteten Zustand vorliegen, gelöst, wobei das dritte oder die weiteren Duromere in einem noch nicht ausgehärteten Zustand vorliegen und die Duromere unterschiedliche Polymerisationstemperaturen aufweisen.

Vorteilhafter Weise ist vorgesehen, dass das erste Duromer eine Polymerisationstemperatur zwischen 30 bis 130°C, vorzugsweise 50 und 100°C, das zweite Duromer eine Polymerisationstemperatur zwischen 150 bis 220°C, vorzugsweise 170 und 220°C und das dritte Duromer eine Polymerisationstemperatur zwischen 230 und 260°C aufweist.

Im Zusammenhang mit der Erfindung ist unter den Begriffen Grundflachelement und Deckflachelement ein Blech, eine Tafel oder ein Abschnitt eines Bandes zu verstehen, das sowohl aus Metall, insbesondere Stahl, und auch aus Kunststoff hergestellt sein kann.

Hierbei ist vorteilhafter Weise vorgesehen, dass in einer Draufsicht gesehen das Grundflachelement und das Deckflachelement die gleichen Außenabmessungen aufweisen und miteinander fluchten. Dieser Verbundwerkstoff liegt somit dann als Bandmaterial oder Tafelabschnitt vor.

In bevorzugter Ausführung ist vorgesehen, dass das Deckflachelement in einer Draufsicht gesehen nur einen Teil des Grundflachelements und somit nicht das gesamte Grundflachelement überdeckt. In diesem Zusammenhang wird als Teil eines Grundflachelements ein Flächenanteil von kleiner 90 %, vorzugsweise kleiner 50 %, des Grundflachelements verstanden.

In dieser Ausgestaltung besteht das Deckflachelement, welches zur lokalen Verstärkung dient und auch als Patch bezeichnet wird, aus Kunststoff oder Metall. Je nach Gebrauchsanforderungen können folglich die positiven Eigenschaften wie Leichtigkeit des Kunststoffes oder Festigkeit des Metalls gezielt eingesetzt werden.

Vorteilhafter Weise besteht auch bei dem Patch die Zwischenschicht aus drei oder mehr Duromeren, wobei mindestens ein Duromer im ausgehärteten Zustand und die anderen Duromere in einem nicht ausgehärteten Zustand vorliegen.

Bevorzugt ist wie bei dem klassischen Verbundblech mit gleichen Abmessungen der Grundflachelemente und der Deckflachelemente vorgesehen, dass das erste Duromer eine Polymerisationstemperatur zwischen 30 bis 130°C, vorzugsweise 50 und 100°C, das zweite Duromer eine Polymerisationstemperatur zwischen 150 bis 240°C, vorzugsweise 170 und 220°C und ein drittes Duromer eine Polymerisationstemperatur zwischen 230 und 260°C aufweist.

Vorteilhafter Weise ist bei dem Patch vorgesehen, dass das Deckflachelement aus Kunststoff oder aus Metall, insbesondere Stahl, besteht.

Die Grundidee der Erfindung besteht darin, dass der Start der Polymerisation der Duromere beispielsweise thermisch durch unterschiedliche Polymerisationstemperaturen oder chemisch durch beispielsweise katalytische Polymerisation oder einen anderen Polymerisationsmechanismus, gesteuert wird, so dass zu unterschiedlichen Zeitpunkten der Herstellung des Verbundwerkstoffs oder der Bauteilfertigung die Polymerisation der jeweiligen Duromere gezielt gestartet werden kann.

Die Polymerisationen, auch als Polyreaktionen bezeichnet, werden hauptsächlich in zwei verschiedene Gruppen unterteilt:
Die erste Gruppe sind die Kettenpolymerisationen. Hierbei reagieren die Monomere miteinander zu Dimeren, Trimeren, Oligo- und schließlich zu Polymeren. Die Kettenpolymerisationsreaktionen werden typischerweise in radikalische, anionische und kationische Polymerisation unterteilt. Charakteristisch ist, dass beim Aufbau der Polymerketten Monomere mit den wachsenden Ketten reagieren und hierbei keine Abspaltung von Nebenprodukten wie beispielsweise Wassermoleküle stattfindet. In den meisten Fällen reagieren die Monomere unspezifisch mit wachsenden Polymerketten unterschiedlichster Länge, so dass während der Reaktion oftmals eine Vielzahl an Kettenlängen gebildet wird.

Die zweite Gruppe der Polymerisationsreaktionen sind die Stufenwachstumsreaktionen. Hierbei reagieren Monomere unter Abspaltung von Molekülen, wie beispielsweise Wasser. Weiterhin findet die Reaktion typischerweise in Stufen statt. Dies bedeutet, dass zu Beginn aus den Monomeren meist nur relativ kurze Ketten, Dimere, Trimere bis hin zu Oligomeren, gebildet werden. Erst wenn der Umsatz zu diesen Zwischenstufen nahezu vollständig erfolgt ist, reagieren diese, als nächste Stufe, miteinander zu Polymeren. Vertreter der Stufenwachstumsreaktionen sind Polyadditionen und die Polykondensationen.

Die Erfindung umfasst weiterhin ein Verfahren zur Herstellung eines vorbeschriebenen, erfindungsgemäßen Verbundwerkstoffs in Band- oder Tafelform, wobei auf ein metallisches Grundflachelement eine Zwischenschicht aus einem ersten Duromer und einem zweiten Duromer mit einer höheren Polymerisationstemperatur als dem ersten Duromer aufgetragen und auf diese ein Deckflachelement aufgelegt und unter Kraft- und/oder Temperatureinfluss ein stoffschlüssiger Verbund zwischen dem Grundflachelement und dem Deckflachelement und der Zwischenschicht erzeugt wird, wobei das erste Duromer aushärtet, welches dadurch gekennzeichnet ist, dass eine Zwischenschicht aus drei oder mehr Duromeren mit unterschiedlichen Polymerisationstemperaturen aufgetragen wird.

Erfindungsgemäß können die verschiedenen Duromere als Folie / Prepreg oder durch Extrusion sowohl als Gemisch mit gleichem oder unterschiedlichem Mischungsverhältnis der verschiedenen Duromere, als auch separat angeordnet auf das Grundflachelement aufgetragen werden.

Weiterhin umfasst die Erfindung ein Verfahren zur Herstellung eines Bauteils aus einem vorbeschriebenen erfindungsgemäßen Verbundwerkstoff, bei dem der Verbundwerkstoff zu einem Bauteil umgeformt wird und das Bauteil anschließend einer Wärmebehandlung zugeführt wird, bei der mindestens ein zweites, bislang noch nicht ausgehärtetes Duromer unter Temperatureinfluss ausgehärtet wird.

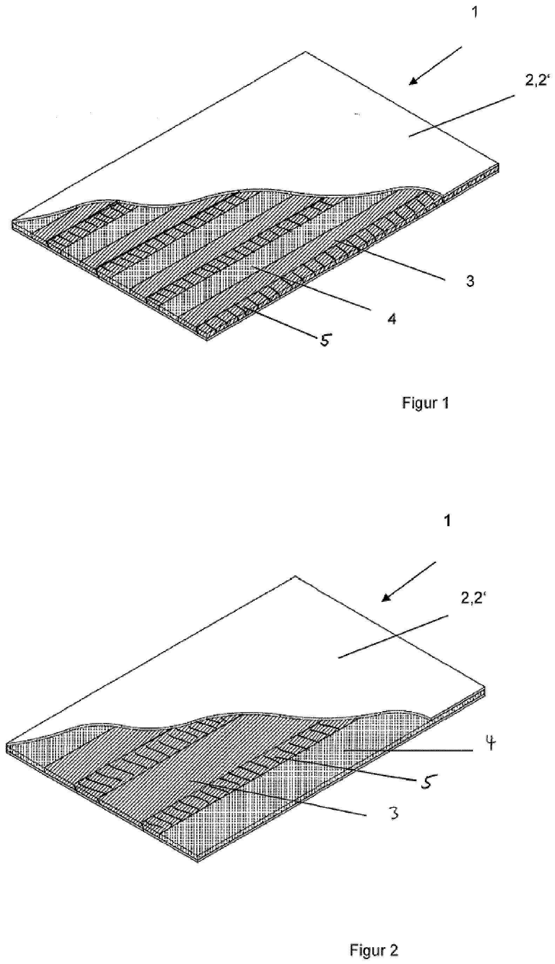

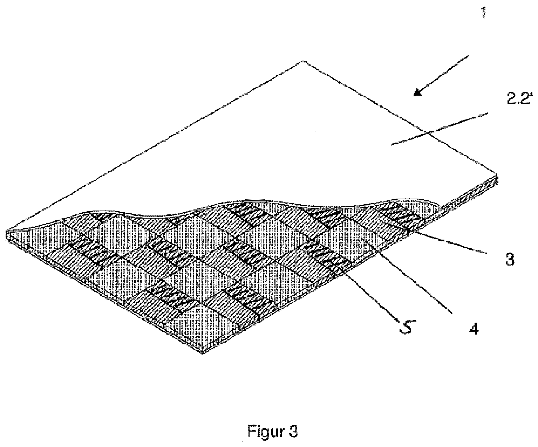

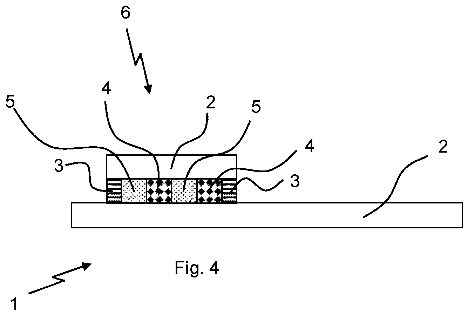

In den Figuren 1 bis 3 sind schematisch und beispielhaft verschiedene Anordnungen der Duromere als Zwischenschicht eines Verbundwerkstoffes dargestellt. In der Figur 4 ist schematisch und beispielhaft in einer Seitenansicht der Verbundwerkstoff 1 dargestellt, wobei das Deckflachelement 2' als lokal verstärkendes Patch 6 fungiert und nur einen Teil des Grundflachelementes 2 überdeckt.

Die Figuren 1 bis 3 zeigen jeweils einen Verbundwerkstoff 1 mit metallischen Grundflachelementen 2 und Deckflachelementen 2', insbesondere Bleche, und einer aus den Duromeren 3, 4 und 5 mit unterschiedlichen Polymerisationstemperaturen bestehenden Zwischenschicht. Die Grundflachelemente 2 und die Deckflachelemente 2' weisen hierbei jeweils die gleichen Außenabmessungen auf und fluchten in der Draufsicht gesehen. In den Figuren 1 und 2 sind unterschiedliche streifenförmige Anordnungen der Duromere 3, 4 und 5 dargestellt, während Figur 3 eine schachbrettartige Anordnung der Duromere 3, 4 und 5 zeigt. Je nach Anforderungen bei der Umformung an die Zwischenschicht können demnach die unterschiedlichsten Anordnungen realisiert werden.

Die Figur 4 zeigt einen Verbundwerkstoff 1 als lokal verstärktes Grundflachelement 2 mit einem metallischen Grundflachelement 2, einem Deckflachelement 2', welches aus Kunststoff oder Metall bestehen kann und Außenabmessungen aufweist, die kleiner sind verglichen mit dem Grundflachelement 2. Insbesondere überdeckt das Deckflachelement 2' in einer Draufsicht beziehungsweise wie dargestellt in einer Seitenansicht nur einen Teil des Grundflachelementes 2. Die Außenabmessungen des Deckflachelements 2 sind somit kleiner als die des Grundflachelementes 2. Angeordnet zwischen dem Grundflachelement 2 und dem Deckflachelement 2' befindet sich eine Zwischenschicht aus duroplastischem Kunststoff. Diese Zwischenschicht kann aus nur einem duroplastischen Kunststoff bestehen oder wie dargestellt, aus drei und mehr Duroplasten 3, 4, 5. Die Anordnung aus Zwischenschicht und Deckflachelement 2' dient der lokalen Verstärkung und wird als Patch 6 bezeichnet.

Es ist selbstverständlich, dass mehr als ein Patch 6 je nach Verstärkungsbedarf nebeneinander auf einem Grundflachelement 2 angeordnet werden können.

Im Folgenden wird die Erfindung am Beispiel von Duromeren beschrieben, die unterschiedliche Polymerisationstemperaturen aufweisen.

Der Verbundwerkstoff besteht beispielsweise aus zwei verzinkten Stahlblechen, zwischen denen sich ein Polymerkern als Zwischenschicht befindet, der aus drei oder mehr Duromeren mit unterschiedlicher Polymerisationstemperatur besteht.

Bei der Herstellung des Verbundwerkstoffes 1 härtet dabei das erste Duromer 3 bei relativ geringen Temperaturen (z.B. 50 - 100°C) aus, während die Polymerisation bei den Duromeren 4 und 5 bei dieser Temperatur noch nicht einsetzt bzw. nur sehr gering ausgeprägt ist.

Durch die Aushärtung von Duromer 3 wird der Abstand der beiden Flachelemente 2, 2' im Verbundwerkstoff 1 voneinander definiert, so dass ein Halbzeug entsteht, bei dem Duromer 4 der Zwischenschicht erst nach der Umformung zu einem Bauteil unter Temperatureinfluss bei z.B. 170 bis 200°C, wie bei der kathodischen Tauchlackierung, vollständig aushärtet.

Dieses Halbzeug kann daher ähnlich zu einem monolytischen Blech zum Bauteil durch Umformung weiterverarbeitet werden. Das schon im Halbzeug ausgehärtete Duromer 3 sorgt dafür, dass der Abstand der beiden Flachelemente 2, 2' voneinander auch bei der Umformung zu einem Bauteil erhalten bleibt. Bei geeigneter Applikation von Duromer 3, beispielsweise in den Randbereichen des Verbundwerkstoffs 1 und des Duromers 4 im inneren Flächenbereich, wird Duromer 4 nicht aus dem Zwischenraum herausgequetscht und kann das Umformwerkzeug somit nicht verschmutzen. Im Anschluss an die Umformung wird Duromer 4 in einem weiteren Wärmebehandlungsschritt unter Temperatureinfluss ausgehärtet und die geforderten Bauteileigenschaften somit realisiert.

Bei der Herstellung des Verbundwerkstoffs 1 kann der Abstand der beiden Flachelemente 2, 2' über den erfindungsgemäßen Aufbau des Verbundwerkstoffs 1 vorteilhaft so eingestellt werden, dass eine Berührung der beiden Flachelemente 2, 2' durch hohe Umformkräfte nicht, oder nur in vorher definierten Bereichen stattfindet.

Der Verlust von Eigenschaften wie Schwingungsdämpfung, Wärmeisolation, Steifigkeit usw. wird so unterbunden.

In dem erfindungsgemäßen Aufbau des Verbundwerkstoffs 1 weist die Zwischenschicht des Verbundwerkstoffs zusätzlich noch einen weiteren Anteil eines dritten Duromers mit noch höherer Polymerisationstemperatur auf. Sollte das Bauteil während des Gebrauchs beschädigt werden (z.B. Ablösung zwischen Flachelementen 2, 2' und Duromerkern 3, 4) wird die Polymerisation des dritten Duromers dann vorteilhaft für eine Reparatur des Bauteils genutzt und so die geforderten Bauteileigenschaften wiederhergestellt. Die Verbindung zwischen Grundflachelement 2 und Deckflachelement 2' wird also nach einer etwaigen Ablösung des Grundflachelements 2 und/oder des Deckflachelements 2' von den Duromeren 3, 4, 5 (Delamination) wiederhergestellt.

Vorteilhaft bei der Weiterverarbeitung des Verbundwerkstoffs 1 zu einem Bauteil ist es, wenn der Unterschied der Polymerisationstemperaturen der jeweiligen Duromere 3, 4, 5 mindestens 10°C beträgt. Als besonders vorteilhaft hat sich eine Differenz von mindestens 40°C herausgestellt.

Als Duromere 3, 4, 5 für den erfindungsgemäßen Verbundwerkstoff 1 bieten sich z.B. Epoxide, Polyurethane oder andere Durplaste an, die eine deutlich bessere Anbindung an die metallischen Decklagen erlauben als dies mit nichtmodifizieren Thermoplasten möglich ist.

Der erfindungsgemäße Verbundwerkstoff ist damit problemlos ohne Werkzeugverschmutzung umformbar, wobei die geforderten Bauteileigenschaften prozesssicher realisiert werden können.

Aufgrund des duromeren Polymerkerns weist das resultierende Bauteil bei gleicher Dicke eine deutlich höhere Steifigkeit auf als dies mit einem vergleichbaren Thermoplast realisierbar wäre.

Vor dem Hintergrund, dass nicht ein einziges teilausgehärtetes Duromer bei der Herstellung des Verbundwerkstoffs verwendet wird, sondern drei oder mehr Duromere, von denen mindestens eines nicht ausgehärtet ist und die anderen ausgehärtet sind, sind die Eigenschaften des erfindungsgemäßen Verbundwerkstoffs und des durch Umformung erzeugten Bauteils zudem deutlich feiner einstellbar, was sich positiv auf die Prozesssicherheit bei der Herstellung auswirkt. Zusätzlich ist die Reaktivität der polymeren Kernschicht aufgrund der nicht stattfindenden Teilaushärtung deutlich höher.

Als Duromere bieten sich Epoxide, Polyurethane oder andere geeignete Duromere an. Erfindungsgemäß können demzufolge für die Zwischenschicht gleiche oder unterschiedliche Duromere mit unterschiedlichen Polymerisationsstartbedingungen verwendet werden, die sich zum Beispiel in der Polymerisationstemperatur unterscheiden.

Grundvoraussetzung ist, dass die Duromere gut an die metallischen Grundflachelemente und/ oder Deckflachelement aus Metall oder Kunststoff anbinden und deren Polymerisationstemperaturen weit genug auseinanderliegen. Es werden drei oder mehr Duromere verwendet, deren Polymerisation auf unterschiedliche Weise ausgelöst wird (beispielsweise thermische versus katalytische Polymerisation).

Mit diesem innovativen Verbundwerkstoff und dem erfindungsgemäßen Herstellverfahren können somit die Nachteile bei der Herstellung eines Bauteils gemäß dem Stand der Technik auf einfache Art überwunden werden.

### Bezugszeichen

1 Verbundwerkstoff
2 Grundflachelement
2' Deckflachelement
3 Duromer
4 Duromer
5 Duromer
6 Patch

## Patentansprüche

1. Verbundwerkstoff (1) bestehend aus einem metallischen Grundflachelement (2), einem Deckflachelement (2') aus Metall und einer zwischen dem Grundflachelement (2) und dem Deckflachelement (2') angeordneten Zwischenschicht aus mindestens einem ersten Duromer (3) und einem zweiten Duromer (4) mit einer höheren Polymerisationstemperatur als dem ersten Duromer (3), wobei mindestens das erste Duromer (3) in einem ausgehärteten Zustand und das zweite Duromer (4) in einem nicht ausgehärteten Zustand vorliegen, **dadurch gekennzeichnet, dass** die Zwischenschicht aus drei oder mehr Duromeren (3, 4, 5) besteht, wobei das dritte oder die weiteren Duromere (5) in einem nicht ausgehärteten Zustand vorliegen und die Duromere (3, 4, 5) unterschiedliche Polymerisationstemperaturen aufweisen.

2. Verbundwerkstoff (1) nach Anspruch 1, **dadurch gekennzeichnet, dass** die Differenz der Polymerisationstemperaturen der einzelnen Duromere (3, 4, 5) mindestens 10°C, vorzugsweise mindestens 40°C, beträgt.

3. Verbundwerkstoff (1) nach Anspruch 1 oder 2, **dadurch gekennzeichnet, dass** das erste Duromer (3) eine Polymerisationstemperatur zwischen 30 bis 130°C, vorzugsweise 50 und 100°C, das zweite Duromer (4) eine Polymerisationstemperatur zwischen 150 bis 220°C, vorzugsweise 170 und 220°C, und das dritte Duromer (5) eine Polymerisationstemperatur zwischen 230 und 260°C aufweist.

4. Verbundwerkstoff (1) nach einem der Ansprüche 1 bis 3, **dadurch gekennzeichnet, dass** in einer Draufsicht gesehen das Grundflachelement (2) und das Deckflachelement (2') die gleichen Außenabmessungen aufweisen und miteinander fluchten.

5. Verbundwerkstoff (1) nach einem der Ansprüche 1 bis 3, **dadurch gekennzeichnet, dass** das Deckflachelement (2') in einer Draufsicht gesehen nur mit einem Flächenanteil von kleiner 90%, vorzugsweise kleiner 50%, das Grundflachelement (2) überdeckt.

6. Verbundwerkstoff (1) nach mindestens einem der Ansprüche 1 bis 5, **dadurch gekennzeichnet, dass** als Zwischenschicht Polymere der gleichen Stoffgruppe, die beispielsweise Polyurethane oder Epoxide umfasst, oder Polymere aus unterschiedlichen Stoffgruppen jeweils mit unterschiedlicher Polymerisationstemperatur verwendet werden.

7. Verfahren zur Herstellung eines Verbundwerkstoffes (1) in Band- oder Tafelformnach einem der Ansprüche 1 bis 6, wobei auf ein metallisches Grundflachelement (2) eine Zwischenschicht aus einem ersten Duromer (3) und einem zweiten Duromer (4) mit einer höheren Polymerisationstemperatur als dem ersten Duromer (3) aufgetragen und auf diese ein Deckflachelement (2') aufgelegt und unter Kraft- und/oder Temperatureinfluss ein stoffschlüssiger Verbund zwischen dem Grundflachelement (2) und dem Deckflachelement (2') und der Zwischenschicht erzeugt wird, wobei das erste Duromer (3) aushärtet, **dadurch gekennzeichnet, dass** eine Zwischenschicht aus drei oder mehr Duromeren (3, 4, 5) mit unterschiedlichen Polymerisationstemperaturen aufgetragen wird.

8. Verfahren nach Anspruch 7, **dadurch gekennzeichnet, dass** die Duromere (3, 4, 5) als Folie / Prepreg oder durch Extrusion auf das erste Grundflachelement (2) aufgetragen werden.

9. Verfahren nach Anspruch 7 oder 8, **dadurch gekennzeichnet, dass** die verschiedenen Duromere (3, 4, 5) als Gemisch oder separat angeordnet auf das erste Grundflachelement (2) aufgetragen werden.

10. Verfahren zur Herstellung eines Bauteils aus einem Verbundwerkstoff (1) nach mindestens einem der Ansprüche 1 bis 6, **dadurch gekennzeichnet, dass** der Verbundwerkstoff (1) zu einem Bauteil umgeformt wird und das Bauteil anschließend einer Wärmebehandlung zugeführt wird, bei der mindestens ein zweites, bislang noch nicht ausgehärtetes Duromer (4) unter Temperatureinfluss ausgehärtet wird.

11. Verfahren nach Anspruch 10, **dadurch gekennzeichnet, dass** der zum Bauteil umgeformte Verbundwerkstoff (1) wärmebehandelt wird, wobei das dritte, bislang noch nicht ausgehärtete Duromer (5) unter Temperatureinfluss ausgehärtet wird und somit die Verbindung des metallischen Grundflachelements (2) und des Deckflachelements (2') wiederhergestellt wird.

## Claims

1. Composite material (1) consisting of a metal bottom planar element (2), a top planar element (2') made of metal, and an intermediate layer which is arranged between the bottom planar element (2) and the top planar element (2') and is made of at least one first thermoset (3) and a second thermoset (4) having a higher polymerisation temperature than the first thermoset (3), at least the first thermoset (3) being in a cured state and the second thermoset (4) being in a non-cured state, **characterised in that** the intermediate layer consists of three or more thermosets (3, 4, 5), the third or the further thermosets (5) being in a non-cured state and the thermosets (3, 4, 5) having different polymerisation temperatures.

2. Composite material (1) according to claim 1, **characterised in that** the difference in the polymerisation temperatures of the individual thermosets (3, 4, 5) is at least 10°C, preferably at least 40°C.

3. Composite material (1) according to either claim 1 or claim 2, **characterised in that** the first thermoset (3) has a polymerisation temperature between 30 and 130°C, preferably 50 and 100°C, the second thermoset (4) has a polymerisation temperature between 150 and 220°C, preferably 170 and 220°C, and the third thermoset (5) has a polymerisation temperature between 230 and 260°C.

4. Composite material (1) according to any of claims 1 to 3, **characterised in that**, viewed in a plan view, the bottom planar element (2) and the top planar element (2') have the same external dimensions and are aligned with one another.

5. Composite material (1) according to any of claims 1 to 3, **characterised in that**, viewed in a plan view, the top planar element (2') only covers 90%, preferably less than 50%, of the area of the bottom planar element (2).

6. Composite material (1) according to at least one of claims 1 to 5, **characterised in that** polymers from the same substance group, which includes polyurethanes or epoxides for example, or polymers from different substance groups that each have a different polymerisation temperature are used as the intermediate layer.

7. Method for producing a composite material (1) in strip or sheet form according to any of claims 1 to 6, an intermediate layer made of a first thermoset (3) and a second thermoset (4) having a higher polymerisation temperature than the first thermoset (3) being applied to a metal bottom planar element (2), a top planar element (2') being placed on said intermediate layer, and an integral bond being produced between the bottom planar element (2) and the top planar element (2') and the intermediate layer under the influence of force and/or temperature, with the first thermoset (3) curing, **characterised in that** an intermediate layer made of three or more thermosets (3, 4, 5) having different polymerisation temperatures is applied.

8. Method according to claim 7, **characterised in that** the thermosets (3, 4, 5) are applied to the first bottom planar element (2) as a film/prepreg or by extrusion.

9. Method according to either claim 7 or claim 8, **characterised in that** the different thermosets (3, 4, 5) are applied to the first bottom planar element (2) as a mixture or so as to be arranged separately.

10. Method for producing a component from a composite material (1) according to at least one of claims 1 to 6, **characterised in that** the composite material (1) is shaped to form a component and the component is then subjected to a heat treatment in which at least one second thermoset (4) which has not yet been cured is cured under the influence of temperature.

11. Method according to claim 10, **characterised in that** the composite material (1) shaped to form the component is heat-treated, the third thermoset (5), which has not yet been cured, being cured under the influence of temperature and the connection between the metal bottom planar element (2) and the top planar element (2') thus being restored.

## Revendications

1. Matériau composite (1) comprenant un élément de base plat métallique (2), un élément de recouvrement plat (2') en métal et une couche intermédiaire disposée entre l'élément de base plat (2) et l'élément de recouvrement plat (2') et comprenant au moins un premier duromère (3) et un deuxième duromère (4) dont la température de polymérisation est supérieure à celle du premier duromère (3), au moins le premier duromère (3) étant à l'état durci et le deuxième duromère (4) étant à l'état non durci, **caractérisé en ce que** la couche intermédiaire comprend trois duromères (3, 4, 5) ou plus, le troisième duromère ou les autres duromères (5) étant présents dans un état non durci et les duromères (3, 4, 5) ayant des températures de polymérisation différentes.

2. Matériau composite (1) selon la revendication 1, **caractérisé en ce que** la différence entre les températures de polymérisation des duromères (3, 4, 5) individuels est d'au moins 10 °C, de préférence d'au moins 40 °C.

3. Matériau composite (1) selon la revendication 1 ou 2, **caractérisé en ce que** le premier duromère (3) a une température de polymérisation comprise entre 30 et 130 °C, de préférence 50 et 100 °C, le deuxième duromère (4) a une température de polymérisation comprise entre 150 et 220 °C, de préférence 170 et 220 °C, et le troisième duromère (5) a une température de polymérisation comprise entre 230 et 260 °C.

4. Matériau composite (1) selon l'une des revendications 1 à 3, **caractérisé en ce qu'**en vue de dessus l'élément de base plat (2) et l'élément de recouvrement plat (2') ont les mêmes dimensions extérieures et sont alignés l'un avec l'autre.

5. Matériau composite (1) selon l'une des revendications 1 à 3, **caractérisé en ce qu'**en vue de dessus l'élément de recouvrement plat (2') ne recouvre l'élément de base plat (2) qu'avec un pourcentage de surface inférieure à 90 %, de préférence inférieur à 50 %.

6. Matériau composite (1) selon l'une au moins des revendications 1 à 5, **caractérisé en ce que** des polymères d'un même groupe de matières, qui comprend par exemple des polyuréthanes ou des époxydes, ou des polymères de différents groupes de matières, ayant des températures de polymérisation différentes, sont utilisés comme couche intermédiaire.

7. Procédé de fabrication d'un matériau composite (1) en forme de bande ou de plaque selon l'une des revendications 1 à 6, dans lequel
une couche intermédiaire, qui comprend un premier duromère (3) et un deuxième duromère (4) dont la température de polymérisation est supérieure à celle du premier duromère (3), est appliquée sur un élément de base plat métallique (2) et un élément de recouvrement plat (2') est placé sur ladite couche intermédiaire et, sous l'influence d'une force et/ou de la température, une liaison de matière est générée entre l'élément de base plat (2) et l'élément de recouvrement plat (2') et la couche intermédiaire, dans lequel le premier duromère (3) durcit, **caractérisé en ce qu'**une couche intermédiaire comprenant trois duromères (3, 4, 5) ou plus ayant des températures de polymérisation différentes est appliquée.

8. Procédé selon la revendication 7, **caractérisé en ce que** les duromères (3, 4, 5) sont appliqués sur le premier élément de base plat (2) sous la forme d'un film préimprégné ou par extrusion.

9. Procédé selon la revendication 7 ou 8, **caractérisé en ce que** les différents duromères (3, 4, 5) sont appliqués en mélange ou séparément sur le premier élément de base plat (2).

10. Procédé de réalisation d'un composant en matériau composite (1) selon l'une au moins des revendications 1 à 6, **caractérisé en ce que** le matériau composite (1) est mis sous la forme d'un composant et le composant est ensuite amené à un traitement thermique pendant lequel au moins un deuxième duromère (4), qui n'a pas encore durci, est durci sous l'influence de la température.

11. Procédé selon la revendication 10, **caractérisé en ce que** le matériau composite (1) mis sous la forme du composant est traité thermiquement, le troisième duromère (5), qui n'a pas encore durci, étant durci sous l'influence de la température et la liaison entre l'élément de base plat métallique (2) et l'élément de recouvrement plat (2') étant ainsi rétablie.
